# EUROPÄISCHE PATENTSCHRIFT

(11) **EP 0 847 331 B1**
(45) Veröffentlichungstag und Bekanntmachung des Hinweises auf die Patenterteilung: **28.05.2003**
(21) Anmeldenummer: 96930110.0
(22) Anmeldetag: 27.08.1996
(51) Int. Cl.: B32B 7/12, C09J 175/06

(54) **SCHICHTSTOFF**
LAMINATE
STRATIFIE

(30) Priorität: 28.08.1995 DE 19531586
(43) Veröffentlichungstag der Anmeldung: 17.06.1998
(73) Patentinhaber: BASF Coatings Aktiengesellschaft, 48165 Münster (DE)
(72) Erfinder: PRISSOK, Frank, D-49448 Lanförde (DE); KIRIAZIS, Leonidas, D-48151 Münster (DE)
(74) Vertreter: Kluin, Jörg-Eden, Dr. Dipl.-Phys.
(86) Internationale Anmeldenummer: EP9603771
(87) Internationale Veröffentlichungsnummer: WO97007974

(56) Entgegenhaltungen:
- EP-A- 0 421 154
- EP-A- 0 484 761
- EP-A- 0 574 802
- US-A- 4 010 311
- US-A- 4 039 719
- US-A- 4 206 299
- US-A- 4 686 125
- US-A- 4 859 523
- DATABASE WPI Week 9523 Derwent Publications Ltd., London, GB; AN 95-175479 XP002021373 & JP,A,07 097 557 (DAINIPPON INK & CHEM. INC.)
- DATABASE WPI Week 8623 Derwent Publications Ltd., London, GB; AN 86-149436 XP002021374 & SU,A,1 193 196 (UKR. CELLULOSE-PAPER RES.)

## Beschreibung

Die vorliegende Erfindung betrifft einen Schichtstoff, ein Verfahren zu dessen Herstellung sowie dessen Verwendung.

In der EP-A-374551 werden beschichtete Substrate offenbart, die zur Herstellung von Anbauteilen für Automobilkarosserien geeignet sind. Die beschriebenen beschichteten Substrate bestehen aus Metallblechen, die mit mindestens einer Lackschicht lackiert sind oder aus Verbundwerkstoffen, deren Oberflächenschicht aus den lackierten Metallteilen besteht.

Aus der P 4424290.9 sind mit mehreren Schichten beschichtete Substrate bekannt. Diese werden verformt und ggf. mit Hilfe weiterer Materialien verarbeitet. Auf diese Weise können Anbauteile für Fahrzeugkarosserien hergestellt werden.

Nach diesem Stand der Technik wird somit ein Metallblech mit einem Füller lackiert, auf den sodann ein Lack aufgetragen wird. Das Metallblech wird anschließend geschnitten und verformt. Teilweise wird auch direkt aus dem Blech die Form heraus gestanzt.

Problematisch bei diesen Verfahren ist, daß das lackierte Metall gebogen werden muß, teilweise bis zu 180 ° . Daher ist es erforderlich, daß der aufgetragene Lack so flexibel ist, daß an der Umbruchkante keine Risse entstehen, die eine Quelle für Korrosion sein könnten. Die flexibel ausgelegten Lacke sind aber so weich, daß deren Oberfläche durch spitze Gegenstände leicht verletzbar ist.

Aufgabe der vorliegenden Erfindung war es demgemäß, einen Schichtstoff zur Verfügung zu stellen, der die oben aufgeführten Nachteile nicht mehr aufweist.

Diese Aufgabe wird durch einen Schichtstoff bestehend aus
a) einer Kunststoffolie,
b) einer Haftvermittlerschicht auf Basis von Polyurethan
   bestehend aus einem oder mehreren Polyester- oder Polyetherdiolen mit einem
   Molekulargewicht von 500 bis 2500, vorzugsweise 800 bis
   1000,
c) ggf. einer weiteren Kunststoffolie,
d) ggf. einer Lackschicht,
e) ggf. einer Füllerschicht und
f) einer Trägermaterialschicht, vorzugsweise aus Kunststoff, Holz oder Metall.

Für die erfindungsgemäßen Kunststoffolien a) und c) kommen vorzugsweise thermoplastische Stoffe in Betracht. Beispielsweise können Folien aus Polyolefin, Polyamid, Polyurethan, Polyester, Polyacrylat, Polycarbonat oder einer Mischung dieser polymeren Stoffe eingesetzt werden. Besonders bevorzugt werden erfindungsgemäß Polyurethane und Polyester.

Als Polyurethanfolie kommt vorzugsweise thermoplastisches, gegen ultraviolette Strahlung stabilisiertes Polyurethan auf der Basis von Diisocyanaten, Diolen als Kettenverlängerern, Polytetrahydrofuran oder linearen Polyesterdiolen in Betracht.

Derartige thermoplastische Polyurethane können beispielsweise hergestellt werden nach dem Band- oder dem Extruderverfahren durch Umsetzung von
a) organischen, vorzugsweise aliphatischen, cycloaliphatischen oder insbesondere aromatischen Diisocyanaten,
b) Polyhydroxylverbindungen mit Molekulargewichten von 500 bis 3000 und
c) Kettenverlängerungsmitteln mit Molekulargewichten von 60 bis 400.
d) ggf in Gegenwart von Katalysatoren,
e) Hilfsmitteln und/oder Zusatzstoffen.

Die hierfür verwendbaren Ausgangsstoffe (a) bis (c), Katalysatoren (d), Hilfsmittel und Zusatzstoffe (e) werden im folgenden näher beschrieben:

a) Als organische Diisocyanate (a) kommen vorzugsweise aliphatische, cycloaliphatische und insbesondere aromatische Diisocyanate in Betracht. Im einzelnen seien beispielhaft genannt: aliphatische Diisocyanate, wie Hexamethylendiisocyanat-1,6, Methylpentamethylen-diisocyanat-1,5, 2-Ethyl-butylen-diisocyanat-1,4 oder Mischungen aus mindestens 2 der genannten C₆-Alkylen-diisocyanate, Pentamethylen-diisocyanat-1,5 und Butylen-diisocyanat-1,4, cycloaliphatische Diisocyanate, wie Isophoron-diisocyanat, 1,4-Cyclohexan-diisocyanat. 1-Methyl-2,4- und -2,6-cyclohexan-diisocyanat sowie die entsprechenden Isomerengemische, 2,4'-, 2,4'- und 2,2'-Dicyclohexylmethan-diisocyanat sowie die entsprechenden Isomerengemische und vorzugsweise aromatische Diisocyanate, wie 2,4-Toluylen-diisocyanat, Gemische aus 2,4- und 2,6-Toluylen-diisocyanat 4,4'-, 2,4'- und 2,2-Diphenylmethan-diisocyanat, Gemische aus 2,4'- und 4,4'-Diphenylmethan-diisocyanat, urethanmodifizierte flüssiges 4,4'- und/oder 2,4'- 4,4-'Diisocyanatodiphe-nylethan-(1,2) und 1,5-Naphtylen-diisocyanat. Vorzugsweise verwendet werden Hexamethylen-diisocyanat-1,6, 4.4'-Dicyclohexylmethan-diisocyanat, Isophoron-diisocyanat, Diphenylmethan-diisocyanat-Isomerengemische mit einem 4,4'-Diphenylmethan-diisocyanatgehalt von größer als 96 Gew.-% und insbesondere 4,4'-Diphenylmethan-diisocyanat.

b) Als höhermolekulare Polyhydroxylverbindungen (b) mit Molekulargewichten von 500 bis 3000 eignen sich vorzugsweise Polyetherole und Polyesterole. In Betracht kommen jedoch auch hydroxylgruppenhaltige Polymere, beispielsweise Polyacetale, wie Polyoxymethylene und vor allem wasserunlösliche Formale, z.B. Polybutandiolformal und Polyhexandiolformal, und aliphatische Polycarbonate, insbesondere solche, aus Diphenylcarbonat und Hexandiol-1,6, hergestellt durch Umesterung, mit den oben genannten Molekulargewichten. Die Polyhydroxylverbindungen müssen zumindest überwiegend linerar, d.h. im Sinne der Isocyanatreaktion difunktionell aufgebaut sein. Die genannten Polyhydroxylverbindungen können als Einzelkomponenten oder in Form von Mischungen zur Anwendung kommen.

Geeignete Polyetherole können hergestellt werden nach bekannten Verfahren, beispielsweise durch anionische Polymerisation mit Alkalihydroxiden, wie Natrium- oder Kaliumhydroxid, oder Alkalialkoholaten, wie Natriummethylat, Natrium- oder Kaliummethylat oder Kaliumisopropylat als Katalysatoren oder durch kationische Polymerisation mit Lewis-Säuren, wie Antimonpentachlorid, Borfluorid-Etherat u.a. oder Bleicherde als Katalysatoren aus einem oder mehreren Alkylenoxiden mit 2 bis 4 Kohlenstoffatomen im Alkylenrest und gegebenenfalls einem Startermolekühl, das 2 reaktive Wasserstoffatome gebunden enthält.

Als Alkylenoxide seien z.B. genannt: Ethylenoxid 1,2-Propylenoxid, Tetrahydrofuran, 1,2- und 2,3 Butylenoxid. Vorzugsweise Anwendung finden Ethylenoxid und Mischungen aus Propylenoxid-1,2 und Ethylenoxid. Die Alkylenoxide können einzeln, alternierend nacheinander oder als Mischung verwendet werden. Als Startermolekül kommen beispielsweise in Betracht: Wasser, Aminoalkohole, wie N-Alkyl-dialkanolamine, beispielsweise N-Methyldiethanolamin und Diole, z.B. Alkandiole oder Dialkylenglykole mit 2 bis 12 C-Atomen, vorzugsweise 2 bis 6 C-Atomen, wie Ethandiol, Propandiol-1,3, Butandiol-1,4 und Hexandiol-1,6. Gegebenenfalls können auch Mischungen von Startermolekülen eingesetzt werden. Geeignete Polyetherole sind ferner die hydroxylgruppenhaltigen Polymerisationsprodukte des Tetrahydrofurans (Polyoxytetramethylenglykole).

Vorzugsweise verwendet werden Polyetherole aus Propylenoxid-1,2 und Ethylenoxid, in denen mehr als 50 %, vorzugsweise 60 bis 80 % der OH-Gruppen primäre Hydroxylgruppen sind und bei denen zumindest ein Teil des Ethylenoxids als endständiger Block angeordnet ist und insbesondere Polyoxytetramethylenglykole.

Solche Polyetherole können erhalten werden, indem man z.B. an das Startermolekül zunächst das Propylenoxid-1,2 und daran anschließend das Ethylenoxid polymerisiert oder zunächst das gesamte Propylenoxid-1,2 im Gemisch mit einem Teil des Ethylenoxids copolymerisiert und den Rest des Ethylenoxids anschließend anpolymerisiert oder schrittweise zunächst einen Teil des Ethylenoxids, dann das gesamte Propylenoxid-1,2 und dann den Rest des Ethylenoxids an das Startermolekül anpolymerisiert.

Die im wesentlichen linearen Polyetherole besitzen Molekulargewichte von 500 bis 3.000, vorzugsweise 500 bis 2500 und insbesondere 800 bis 1000. Sie können sowohl einzeln als auch in Form von Mischungen untereinander zur Anwendung kommen.

Geeignete Polyesterole können beispielsweise aus Dicarbonsäuren mit 2 bis 12 Kohlenstoffatomen, vorzugsweise 4 bis 8 Kohlenstoffatomen, und mehrwertigen Alkoholen hergestellt werden. Als Dicarbonsäuren kommen beispielsweise in Betracht: aliphatische Dicarbonsäuren, wie Bernsteinsäure, Glutarsäure, Korksäure, Azelainsäure, Sebacinsäure und vorzugsweise Adipinsäure und aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden.

Desgleichen sind Mischungen aus aromatischen und aliphatischen Dicarbonsäuren einsetzbar. Zur Herstellung der Polyesterole kann es gegebenenfalls vorteilhaft sein, anstelle der Dicarbonsäuren die entsprechenden Dicarbonsäurederivate, wie Dicarbonsäureester mit 1 bis 4 Kohlenstoffatomen im Alkoholrest, Dicarbonsäureanhydride oder Dicarbonsäurechloride zu verwenden. Beispiele für mehrwertige Alkohole sind Alkandiole mit 2 bis 10, vorzugsweise 2 bis 6 Kohlenstoffatomen, wie Ethandiol, Propandiol-1,3, Butandiol-1,4, Pentandiol-1,5, Hexandiol-1,6, Decandiol-1,10, 2,2-Dimenthylpropandiol-1,3, Propandiol-1,2 und Dialkylenetherglykole wie Diethylenglykol und Dipropylenglykol. Je nach den gewünschten Eigenschaften können die mehrwertigen Alkohole allein oder gegebenenfalls in Mischungen untereinander verwendet werden.

Geeignet sind ferner Ester der Kohlensäure mit den genannten Diolen, insbesondere solchen mit 4 bis 6 Kohlenstoffatomen, wie Butandiol-1,4 und/oder Hexandiol-1,6, Kondensationsprodukte von α-Hydroxycarbonsäuren, beispielsweise α- Hydroxycapronsäure und vorzugsweise Polymerisationsprodukte von Lactonen, beispielsweise gegebenenfalls substituierten ε-Caprolactonen.

Als Polysterole vorzugsweise verwendet werden Alkandiol-polyadipate mit 2 bis 6 Kohlenstoffatomen im Alkylenrest, wie z.B. Ethandiolpolyadipate, 1,6-Hexandiol- 1,4-Butandiol-polyadipate, Ethandiolbutandiol-1,4-polyadipate,1,6-Hexandiol-neopentylglykolpolyadipate,Polycaprolactone und insbesondere 1,4-Butandiol-polyadipate.

Die Polysterole besitzen Molekulargewichte (Gewichtsmittel) von 500 bis 3.000, vorzugsweise 800 bis 1000.

c) Als Kettenverlängerungsmittel (c) mit Molekulargewichtigen von 60 bis 400, vorzugsweise 60 bis 300, kommen vorzugsweise Alkandiole mit 2 bis 12 Kohlenstoffatomen, vorzugsweise mit 2,4 oder 6 Kohlenstoffatomen, wie z.B. Ethandiol, Hexandiol-1,6, und insbesondere Butandiol-1,4 und Dialkylenetherglykole, wie z.B. Diethylenglykol und Dipropylenglykol in Betracht. Geeignet sind jedoch auch Diester der Terephthalsäure mit Alkandiolen mit 2 bis 4 Kohlenstoffatomen, wie z.B. Terephtalsäure-bis-ethandiol oder-butandiol-1,4, Hydroxyalkylenether des Hydrochinons, wie z.B. 1,4-Di-(β-hydroxyethyl)-hydrochinon, (cyclo)aliphatische Diamine, wie z.B. 4,4'-Diaminodicyclohexylmethan, 3,3'-Dimethyl-4,4'-diaminodicyclohexylmethan, Isophorondiamin, Ethylendiamin, 1,2-, 1,3-Propylendiamin, N-Methyl-propylendiamin-1,3, N,N'-Dimethylethylendiamin und aromatische Diamine, wie z.B. 2,4- und 2,6-Toluylen-diamin, 3,5-Diethyl-2,4- und 2,6-Toluylen-diamin und primäre, ortho-di-tri- und/oder -tetraalkylsubstituierte 4,4'-Diaminodiphenylmethane.

Als Kettenverlängerungsmittel finden vorzugsweise Verwendung Alkandiole mit 2 bis 6 C-Atomen im Alkylenrest, insbesondere Butandiol-1,4 und/oder Dialkylenglykole mit 4 bis 8 Kohlenstoffatomen.

Zur Einstellung von Härte- und Schmelzpunkt der thermoplastischen Polyurethane können die Aufbaukomponenten (b) und (c) in relativ breiten molaren Verhältnissen variiert werden. Bewährt haben sich molare Verhältnisse von Polyhydroxylverbindungen (b) zu Kettenverlängerungsmitteln (c) von 1:1 bis 1:12, insbesondere von 1:1,8 bis 1:6,4, wobei die Härte und der Schmelzpunkt der thermoplastische Polyurethane mit zunehmendem Gehalt an Diolen ansteigt.

Zur Herstellung der thermoplastischen Polyurethane werden die Aufbaukomponenten (a), (b) und (c) in Gegenwart von gegebenenfalls Katalysatoren (d), Hilfsmitteln und/oder Zusatzstoffen (e) in solchen Mengen zur Reaktion gebracht, daß das Äquivalenzverhältnis von NCO-Gruppen der Diisocyanate (a) zur Summe der Hydroxylgruppen oder Hydroxyl- und Aminogruppen der Komponenten (b) und (c) 1:0,85 bis 1,25, vorzugsweise 1:0,95 bis 1:1,05 und insbesondere 1:0,98 bis 1,02 beträgt.

d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)-acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,002 bis 0,1 Teilen pro 100 Teile Polyhydroxylverbindung (b) eingesetzt.

e) Neben Katalysatoren können den Aufbaukomponenten (a) bis (c) auch Hilfsmittel und/oder Zusatzstoffe (e) einverleibt werden. Genannt seien beispielsweise Gleitmittel, Inhibitoren, Stabilisatoren gegen Hydrolyse, Licht, Hitze oder Verfärbung, Farbstoffe, Pigmente, anorganische und/oder Füllstoffe, Verstärkungsmittel und Weichmacher.

Nähere Angaben über die oben genannten Hilfsmittel- und Zusatzstoffe sind der Fachliteratur, beispielsweise der Monographie von J.H.Saunders und K.C. Frisch "High Polymers", Band XVI, Polyurethane, Teil 1 und 2, Verlag Interscience Publishers 1962 bzw. 1969, dem vorgenannten Kunststoff-Handbuch, Band XII, Polyurethane oder der DE-OS 29 01 774 zu entnehmen.

Wie bereits dargelegt wurde, kann das thermoplastische Polyurethan vorzugsweise nach dem Bandverfahren hergestellt werden. Im einzelnen wird beim Bandverfahren auf folgende Weise verfahren:

Die Aufbaukomponenten (a) bis (c) und gegebenenfalls (d) und/oder (e) werden bei Temperaturen oberhalb des Schmelzpunktes der Aufbaukomponenten (a) bis (c) mit Hilfe eines Mischkopfes kontinuierlich gemischt. Die Reaktionsmischung wird auf einen Träger, vorzugsweise Förderband, aufgebracht und durch eine temperierte Zone geführt. Die Reaktionstemperatur in der temperierten Zone beträgt 60 bis 200°C, vorzugsweise 100 bis 180°C und die Verweilzeit 0,05 bis 0,5 Stunden, vorzugsweise 0,1 bis 0,3 Stunden. Nach beendeter Reaktion läßt man das thermoplastische Polyurethan abkühlen und zerkleinert oder granuliert es anschließend.

Beim Extruderverfahren werden die Aufbaukomponenten (a) bis (c) und gegebenenfalls (d) und (e) einzeln oder als Gemisch in den Extruder eingeführt, bei Temperaturen von 100 bis 250 C, vorzugsweise 140 bis 220 C zur Reaktion gebracht, das erhaltene thermoplastische Polyurethan wird extrudiert, abgekühlt und granuliert.

Vorzugsweise Anwendung finden thermoplastische Polyurethane mit einer Shore A-Härte von 60 bis 98, vorzugsweise von 70 bis 90, die hergestellt werden durch Umsetzung von Polyoxytetramethylenglykol oder insbesondere Alkandiolpolyadipaten mit 2 bis 6 C-Atomen im Alkylenrest, linearen aliphatischen und/oder cycloaliphatischen Diisocyanaten, z.B. Hexamethylendiisocyanat-1,6 oder 4,4-Dicyclohexylmethan-diisocyanat, und vorzugsweise aromatischen Diisocyanaten und/oder insbesondere 4,4'-Diphenylmethandiisocyanat und Butandiol-1,4 im Äquivalenzverhältnis von NCO-: OH-Gruppen von 1:0,95 bis 1,10.

Das thermoplastische Polyurethan ist erfindungsgemäß zur Stabilisierung gegen Wärme und Oxidation mit Antioxidanzien, vorzugsweise sterisch gehinderten Phenolen versetzt. Um den Schutz gegen ultraviolette Strahlung noch zu verbessern, können spezielle UV-Filtersubstanzen in das thermoplastische Polyurethan eingemischt werden. Vorzugsweise werden hierfür Benztriazole verwendet.

Zum Schutz gegen hydrolytischen Abbau werden die Polyurethane mit Hydrolyseschutzmitteln, wie z.B. Carbodiimiden versetzt. Ferner können die thermoplastischen Urethane mit als Radikalfänger wirkenden Substanzen vermischt sein. Hierfür kommen insbesondere sterisch gehinderte Amine oder Epoxidverbindungen in Betracht.
Die Härte des erfindungsgemäß eingesetzten thermoplastischen Polyurethans hängt von dem Anwendungsbereich ab. Grundsätzlich liegt die Shore-Härte zwischen 75 A und 85 D. Für den Bereich der Haftvermittler kommen 60 A bis 98 A insbesondere 70 bis 90 A in Betracht.

Als thermoplastische Polyester kommen Kunststoffe in Form von Copolyestern, Polyesterelastomeren, Polymermischungen und aromatischen Polyestern (Polyarylaten) in Betracht. Erfindungsgemäß besonders bevorzugt werden Polyester aus der Gruppe der Polyalkylenterephthalate der Formel:

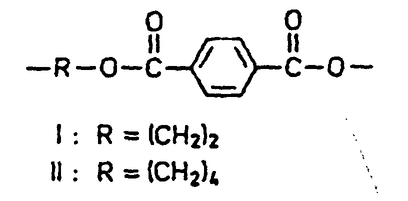

Der technische wichtigste erfindungsgemäß einsetzbare Vertreter dieser thermoplastischen Polymeren ist Polyethylenterephthalat der Formel I. Die technische Herstellung dieses Stoffes erfolgt 1. durch Umesterung von Dimethylterephthalat mit Ethylenglykol unter Methanolabspaltung zum Bis(2-hydroxyethyl)terephthalat und dessen Polykondensation unter Freisetzen von Ethylenglykol oder 2. durch direkte Polykondensation von Ethylenglykol und Terephthalsäure.

Die Polyethylenterephthalatfolien sind Produkte mit hoher Festigkeit, Steifheit und Maßbeständigkeit, guten Gleit- und Verschleißeigenschaften sowie hoher Chemikalienbeständigkeit.

Die resultierenden Copolyester besitzen hohe Transparenz, Zähigkeit, Maßbeständigkeit sowie günstige Zeitstand-, Gleit-, Verschleiß- und Spannungsriß-Eigenschaften.

Erfindungsgemäß weiterhin bevorzugte thermoplastische Polyalkylenterephthalate sind die Polyoutylenterephthalate der Formel II. Derartige Polyester werden technisch hergestellt durch Umesterung von Dimethylterephthalat mit 1,4-Butandiol und anschließende Polykondensation des dabei resultierenden Bis(4-hydroxybutyl)terephthalsäureesters in Gegenwart von Titansäureestern unter Abspaltung von 1,4-Butandiol.

Kennzeichnend für die Polybutylenterephthalatfolien sind hohe Festigkeit, Steifheit, Härte, Zähigkeit bei tiefen Temperaturen und Formbeständigkeit in der Wärme, gutes Gleit- und Verschleißverhalten, niedrige Wasseraufnahme, hohe Maßbeständigkeit und Stabilität gegenüber organischen Lösemitteln, Kraftstoffen, Ölen und Fetten.

Polybutylenterephthalate haben eine Dichte von ca. 1,3 bis 1,5 g/cm³, eine Glasübergangstemperatur von ca. 25 °C und einen Erweichungspunkt von ca. 230 °C. Die Polybutylenterephthalatfolien sind spannungsrißbeständig und durch Spritzgießen, Extrudieren und Warmumformen verarbeitbar. Physiologisch werden die Polybutylenterephthalate als unbedenklich eingestuft.

Die beschriebenen Folien aus Polyurethan oder Polyester besitzen somit die nötige Flexibilität und Härte, so daß eine Biegung von 180 ° ohne Rißbildung sich durchführen läßt, aber zugleich ein ausreichender Schutz gegen Verletzung der Oberfläche durch spitze Gegenstände gewährleistet ist.

Die eingesetzten Kunststoffolien weisen eine Dicke von 10 bis 500 µm, vorzugsweise 40 bis 150 µm auf und können Farbstoffe und/oder Pigmente enthalten.

Problematisch war nach dem bisherigen Stand der Technik beim Aufbringen der Folien das Erreichen einer ausreichenden Haftung. Erfindungsgemäß wird dies durch einen Haftvermittler auf der Basis von Polyurethan erreicht, das aus einem oder mehreren Polyesterdiolen mit einem Molekulargewicht von 600 bis 1200, vorzugsweise 800 bis 1000 besteht. Als Polyesterdiole kommen Polybutandioladipate, Polyethylenglykol oder Gemische hiervon in Betracht.

Als Isocyanatkomponenten enthalten die Polyurethan Haftvermittler.

a) Als organische Diisocyanate (a) kommen vorzugsweise aliphatische, cycloaliphatische und insbesondere aromatische Diisocyanate in Betracht. Im einzelnen seien beispielhaft genannt:
aliphatische Diisocyanate, wie Hexamethylendiisocyanat-1,6, Methylpentamethylen-diisocyanat-1,5, 2-Ethyl-butylen-diisocynat-1,4 oder Mischungen aus mindestens 2 der genannten C₆ -Alkylen-diisocyanate, Pentamethylen-diisocyanat-1,5 und Butylen-diisocyanat-1,4, cycloaliphatische Diisocyanate, wie Isophoron-diisocyanat, 1,4-Cyclohexan-diisocyanat sowie die entsprechenden Isomerengemische, 2,4'-, 2,4'und 2,2'-Dicyclohexylmethan-diisocyanat sowie die entsprechenden Isomerengemische und vorzugsweise aromatische Diisocvyanate, wie 2,4-Toluylen-diisocyanat, Gemische aus 2,4- und 2,6-Toluylen-diisocyanat 4,4'-, 2,4'- und 2,2-Diphenylmethan-diisocyanat, urethanmodifiziertes flüssiges 4,4'- und /oder 2,4'-4,4'Diisocanatodiphenylethan-(1,2). Vorzugsweise verwendet werden Hexamethylen-diisocyanat-Isomerengemische mit einem 4,4'-Diphenylmethan-diisocyanatgehalt von größer als 96 Gew.-% und insbesondere 4,4'-Diphenylmethan-diisocyanat.

Die beschriebenen Haftvermittler können auf die verschiedensten Substrate aufgebracht werden und hier eine sehr gute Haftung mit den oben beschriebenen Kunststoffolien bewirken. Erfindungsgemäß kann demgemäß der Haftvermittler Verwendung finden zur Verbindung von zwei der oben beschriebenen Folien oder zum Auftrag auf Substrate aus Holz, Metall, Papier oder Kunststoff.

Erfindungsgemäß kann der Haftvermittler als eine eigenständige Schicht oder als eine coextrudierte Folie aus Haftvermittler und oben beschriebener Kunststoffolie oder als haftvermittlende Schicht zwischen zwei Folien fungieren.

Die Haftvermittlerschicht kann Pigmente enthalten.

Der Haftvermittler ist erfindungsgemäß pasteurisations- (80 °C für 30 Min.) und sterilisationsbeständig (130°C für 1 Std.). Er ist beständig gegen die verschiedensten Medien, z.B. Wasser, Essigsäure, Milchsäure, Salzlösung und Tomatenmark. Diese positiven Eigenschaften bedingen ein breites Anwendungsfeld im Bereich der Haushaltsgeräte, Konservendosen, Automobile, Möbel, Pappe- und Papierbeschichtung.

Die ausgezeichneten Haftvermittlereigenschaften bedingen, daß ein Auftrag auf die verschiedensten Substrate möglich ist. Insbesondere beim Einsatz für die Automobilindustrie kann erfindungsgemäß ein Metallblech verwendet werden, das mit einer Füller- und/oder Lackschicht beaufschlagt ist. Mit beiden Materialien läßt sich eine gleichermaßen gute Verbindung erreichen.

Die Füllerschicht hat im wesentlichen zwei Aufgaben: Zum einen soll sie die Unebenheiten der Elektrotauchgrundierung ausgleichen und zum anderen die Steinschlagbeständigkeit der Gesamtlackierung verbessern. Die Füllerzusammensetzungen bestehen im wesentlichen aus einem Bindemittel, einem Vernetzungsmittel, Pigmenten und Füllstoffen sowie ggf. weiteren Additiven, wie z.B. Vernetzungskatalysatoren und Verlaufsmitteln.

Die einsetzbaren Füllerzusammensetzungen können als Bindemittel Epoxidharze, Polyesterharze, Polyurethanharze, Polyacrylatharze und Alkydharze oder Kombinationen aus solchen Harzen enthalten. Als Vernetzungsmittel können die einsetzbaren Füllerzusammensetzungen Aminoplaste, wie z.B. Melamin, Formaldehydharze, Amine, Polyisocyanate und Carboxylgruppen enthaltende Verbindungen enthalten. Als Beispiele für Pigmente, die in den einsetzbaren Füllerzusammensetzungen vorhanden sein können, werden Titandioxid, Phthalocyanine, Eisenoxide und Ruß genannt. Als Füllstoffe können die Füllerzusammensetzungen beispielsweise Kalk oder Bariumsulfat enthalten.

In jedem Falle ist bei der Verwendung der Füllerzusammensetzungen auf eine ausreichende Flexibilität zu achten. Diese kann erfindungsgemäß über den Vernetzungsgrad gesteuert werden.

Als Lack kann jeder für die konventionelle Lackierung von Automobilkarosserien geeigneter Decklack bzw. Basislack verwendet werden. Voraussetzung ist allerdings auch hier eine gute Flexibilität des ausgehärteten Lacks notwendig. Derartige Lacke sind dem Fachmann gut bekannt. Sie enthalten im wesentlichen ein polymeres Bindemittel, ggf. ein Vernetzungsmittel sowie Pigmente oder eine Mischung aus Pigmenten.

Ein Decklack bzw. Basislack kann als Bindemittel beispielsweise ein Polyesterharz, ein Polyurethanharz oder ein Polyacrylatharz oder eine Mischung aus solchen Bindemitteln enthalten. Als Vernetzungsmittel kann der Lack ein Aminoplastharz, ein Polyisocyanatharz, ein carboxylgruppenenthaltendes Vernetzungsmittel oder eine Mischung aus solchen Vernetzungsmitteln enthalten. Als Beispiele für Pigmente, die Verwendung finden können, seinen Titandioxid, Phthalocyaninpigmente, Ruß, Eisenoxidpigmente, Aluminiumplättchenpigmente und Perlglanzpigmente genannt.

Neben den beschriebenen Lacken können auch übliche Klarlacke Verwendung finden. In diesem Falle bietet es sich an, eine weitere pigmenthaltige Schicht anzuordnen oder die anderen Schichten des Schichtstoffes mit Pigmenten zu versehen, z.B. die Kunststoffolie, die Haftschicht oder den Füller.

Als zu beschichtendes Substrat kommen je nach Anwendungsbereich verschiedene Materialien in Betracht. Für den Bereich der Automobilindustrie sind dies vorzugsweise Trägermaterialien aus Metall oder Kunststoff. Im letzteren Falle werden besonders Polyester und Polyurethane bevorzugt. Ebenso können erfindungsgemäß auch Schichtstoff für Möbel hergestellt werden. In diesem Fall ist das zu beschichtende Substrat ein Kunststoff, Holz- oder Spanholzplatten. Die erzielten Oberflächen zeichnen sich durch eine ausgezeichnete Beständigkeit gegen harte Gegenstände und gegen Chemikalien aus. Ferner weisen die beschichteten Flächen einen hohen Glanz auf. Schließlich besteht erfindungsgemäß die Möglichkeit, mittels Prägewalzen Strukturoberflächen zu erzielen. Auch beim Einsatz für die Möbelindustrie ist von großem Vorteil, daß trotz der außergewöhnlichen Härte der Oberfläche eine Biegung um 180 ° möglich ist, ohne daß an den Kanten ein Bruch verursacht wird. Selbst wenn sehr harter Lack verwendet wird, der selbst brechen würde, bewirkt der Schutz der Folie, daß der Verbund als solcher nicht bricht. Erfindungsgemäß lassen sich somit Möbelkanten optimal beschichten, ohne daß es zu dem nach dem bisherigen Stand der Technik nachteiligen Brechen in diesem Bereich kommt.

Die hervorragenden Eigenschaften des erfindungsgemäßen Schichtstoffes bedingen auch die Verwendbarkeit für Pappen und Papier. Insbesondere für Tapeten können strukturierte Oberflächen erstellt werden.

Die vorliegende Erfindung betrifft auch ein Verfahren zur Herstellung des erfindungsgemäßen Schichtstoffes. Hierbei werden auf eine Trägermaterialschicht, vorzugsweise aus Polyester, Polyurethan, Holz oder Metall die oben beschriebene Haftvermittlerschicht und anschließend die oben beschriebene Kunststoffolie aufgetragen. Haftvermittlerschicht und Kunststoffolie können gleichzeitig oder nacheinander auf das Trägersubstrat aufgetragen werden.

Erfindungsgemäß werden für den Auftrag erhöhte Temperaturen und Drücke verwendet. Die Temperaturen liegen erfindungsgemäß bei 100 bis 230°C,, vorzugsweise bei.150 bis 200°C. Der Druck beträgt 1 bis 150, vorzugsweise 5 bis 50 bar.

Bei der Verwendung für die Automobilkarosserien werden erfindungsgemäß die zu beschichtenden Metalle vorzugsweise mit einer Füller- und/oder Lackschicht überschichtet. Anschließend werden Lack- und Füllerschicht ausgehärtet. Erfindungsgemäß ist es jedoch auch möglich, die aufgetragene Füllerschicht vor dem Überlackieren auszuhärten.

Die Aushärtung der Lackschichten erfolgt üblicherweise durch Erhitzen auf Temperaturen von 60 bis 230 °C. Dabei kommt es zu einer Reaktion zwischen den in den Lacken enthaltenen Bindemitteln und Vernetzungsmitteln und es werden dreidimensionale polymere Netzwerke gebildet, die der Lackoberfläche eine besonders hohe Resistenz gegenüber mechanischen und chemischen Angriffen verleihen.

Die Applikation der Lackschichten kann beispielsweise durch Spritzen, Walzen und Rackeln erfolgen.

Die erfindungsgemäßen beschriebenen Schichtstoffe auf Basis von Metallsubstraten lassen sich zusammenrollen. Daher können diese Produkte in Form von Rollen angeboten und geliefert werden. Durch den speziellen Verbund mit der Kunststoffolie über die erfindungsgemäß eingesetzte Haftvermittlerschicht weisen die Schichtstoffe hier ebenfalls ihren besonderen Vorteil auf. Denn durch die ausgezeichnete Flexibilität kann es beim Zusammenrollen zu keiner Bruchbildung oder sonstigen Beschädigung kommen.

Die erfindungsgemäßen Schichtstoffe auf Basis von Metallsubstraten eignen sich zur Herstellung von Formteilen, vorzugsweise zur Herstellung von Fahrzeugkarosserien, von Anbauteilen für Fahrzeugkarosserien, von Haushaltsgeräten, z.B. Kühlschränken, Waschmaschinen, Geschirrspülmaschinen. Hierbei werden die Schichtstoffe, die als Rolle gelagert und geliefert werden können, zur Herstellung der Formteile ausgeschnitten und geformt. Bei dieser Herstellungsweise wirkt sich ebenfalls vorteilhaft die Flexibilität und Härte der Oberflächen der Schichtstoffe aus.

Die Erfindung wird im folgenden unter Bezugnahme auf die Beispiele näher beschrieben:
Als Kunststoffolien a) sind folgende Folien getestet worden:
A. Polyurethan-Folien der Firma Elastogran:
   1)Elastollan® 1180A bis 1174D
   2)Elastollan® SP 834
   3)Elastollane® C74D (weiß)
B. Polyester-Folien
   1) Ultradur® der Firma BASF AG
   2) Melinex® der Firma. ICI
   3) Elastotec® der Firma Elastogran
   4) Hostadur®

Dicke der Folien 12 bis 150µm.
Als Haftvermittlerschicht sind hier folgende Beispiele genannt:
Elastollan SP 876 (40µm dick)
Elastollan LP 9034 (40µm dick)

Die Schicht c) entspricht der Schicht a).
Die Lackschichten d) und e) sind z. B: Coillacke und Primer, die zum lackieren von Metall für die Verwendung zur Herstellung von Haushaltsgeräten.
Ein Beispiel für den erfindungsgemäßen Schichtaufbau ist:
a) Kunststoffolie: PBT Ultradur B4550 der BASF AG, 20µm dick
b) Kunststoffolie: LP 9034 der Elastogran, 40 µm dick
c) Coillack: CH 26-0362 der BASF L+F AG (20µm)
d) Primerlack: CP 21-0916 der BASF L+F AG (5µm)
e) Metall: BONDER 901620B (0,75 mm dick).

Als Trägerschicht f) wurden getestet:
1.) Kunststoff: Polyurethan-Platten, Acrylnitril-Butadien- Styrol-Copolymere, Polypropylen usw.
2) Holz: verschiedene Holzsorten, Sperrholz, Furnier, Papier
3) Metall: Stahl, Eisen, Weißblech, Aluminium.

## Patentansprüche

1. Schichtstoff bestehend aus
a) einer Kunststoffolie
b) einer Haftvermittlerschicht auf Basis von Polyurethan enthaltend ein oder mehrere Polyesterdiole mit einem Molekulargewicht von 500 bis 2500, vorzugsweise 800 bis 1000,
c) ggf einer weiteren Kunststoffolie,
d) ggf. einer weiteren Haftvermittlerschicht auf Basis von Polyurethan
e) einer Lackschicht,
f) einer Füllerschicht und
g) einer Trägermaterialschicht, vorzugsweise aus Kunststoff, Holz oder Metall.

2. Schichtstoff nach Anspruch 1,
**dadurch gekennzeichnet, daß** die Polyesterdiole Polybutandioladipate, Polyethylenglykol oder Gemische hiervon sind.

3. Schichtstoff nach einem der Ansprüche 1 oder 2,
**dadurch gekennzeichnet, daß** die Haftvermittlerschichten Pigmente enthalten.

4. Schichtstoff nach einem der Ansprüche 1 bis 3,
**dadurch gekennzeichnet, daß** die Kunststoffolien a) und c) aus Polyurethan oder Polyester bestehen.

5. Schichtstoff nach einem der Ansprüche 1 bis 4,
**dadurch gekennzeichnet, daß** die Kunststoffolien pigmentiert sind.

6. Schichtstoff nach einem der Ansprüche 4 oder 5,
**dadurch gekennzeichnet, daß** die Kunststoffolie a) und c) ein thermoplastisches, gegen UV-Strahlung stabilisiertes Polyurethan auf der Basis von Diisocyanaten, kurzkettigen Diolen als Kettenverlängerern und langkettigen Polyethern und/oder Polyesterdiolen mit besonderer Bevorzugung von Polytetrahydrofuran und linearen Polybutandioladipaten ist.

7. Schichtstoff nach einem der Ansprüche 4 oder 5,
**dadurch gekennzeichnet, daß** als Polyester Polyalkylenterephthalate, vorzugsweise Polyethylenterephthalat und/oder Polybutylenterephthalat sind.

8. Schichtstoff nach einem der Ansprüche 1 bis 7,
**dadurch gekennzeichnet, daß** die Lackschicht e) aus einer Klarlackschicht und einer darunter angeordneten pigmenthaltigen Lackschicht besteht.

9. Verfahren zur Herstellung des Schichtstoffes nach einem der Ansprüche 1 bis 8,
**dadurch gekennzeichnet,daß**
a) auf eine Trägermaterialschicht, vorzugsweise aus Polyester, Polyurethan, Holz oder Metall eine Füllerschicht,
b) min. eine Lackschicht,
c) eine Haftvermittlerschicht auf Basis von Polyurethan enthaltend eine oder mehrere Polyesterdiole mit einem Molekulargewicht von 500 bis 2500, vorzugsweise 800 bis 1000 und
d) eine Kunststoffolie aufgebracht werden.

10. Verfahren nach Anspruch 9,
**dadurch gekennzeichnet, daß** die Haftvermittlerschicht bei einem Druck von 1 bis 150, vorzugsweise 5 bis 50 bar aufgebracht wird.

11. Verfahren nach Anspruch 10,
**dadurch gekennzeichnet, daß** das Aufpressen der Haftvermittlerschicht bei einer Temperatur von 100 bis 230°, vorzugsweise 150 bis 200 °C durchgeführt wird.

12. Verwendung des Schichtstoffs nach einem der Ansprüche 1 bis 8 für Haushaltsgeräte, Konservendosen, Kraftfahrzeugkarosserien, Möbel und Möbelteile, Pappe und Papier, vorzugsweise Tapeten.

## Claims

1. A laminate consisting of
a) a plastic film,
b) an adhesion-promoting layer based on polyurethane consisting of one or more polyesterdiols having a molecular weight of from 500 to 2500, preferably from 800 to 1000,
c) if desired, a further plastic film,
d) if desired, a further adhesion-promoting layer based on polyurethane,
e) a layer of a coating material,
f) a surfacer layer, and
g) a layer of support material, preferably of plastic, wood or metal.

2. The laminate as claimed in claim 1,
wherein the polyesterdiols are polybutanediol adipates, polyethylene glycol and mixtures thereof.

3. The laminate as claimed in one of claims 1 and 2,
wherein the adhesion-promoting layers comprise pigments.

4. The laminate as claimed in one of claims 1 to 3,
wherein the plastic films a) and c) consist of polyurethane or polyester.

5. The laminate as claimed in one of claims 1 to 4,
wherein the plastic films are pigmented.

6. The laminate as claimed in one of claims 4 and 5,
wherein the plastic film a) and c) is a thermoplastic polyurethane which is stabilized against UV radiation and is based on diisocyanates, short-chain diols as chain extenders and long-chain polyethers and/or polyesterdiols, with particular preference on polytetrahydrofuran and linear polybutanediol adipates.

7. The laminate as claimed in one of claims 4 and 5,
wherein polyesters present are polyalkylene terephthalates, preferably polyethylene terephthalate and/or polybutylene terephthalate.

8. The laminate as claimed in one of claims 1 to 7,
wherein the coating layer e) consists of a clearcoat layer and, arranged below it, a pigment-containing paint layer.

9. A process for producing the laminate as claimed in one of claims 1 to 8,
which comprises applying
a) to a layer of support material, preferably consisting of polyester, polyurethane, wood or metal, a surfacer layer,
b) at least one layer of coating material,
c) an adhesion-promoting layer based on polyurethane comprising one or more polyesterdiols having a molecular weight of from 500 to 2500, preferably from 800 to 1000, and
d) a plastic film.

10. The process as claimed in claim 9,
wherein the adhesion-promoting layer is applied at a pressure of from 1 to 150, preferably from 5 to 50 bar.

11. The process as claimed in claim 10,
wherein the pressing-on of the adhesion-promoting layer is carried out at a temperature of from 100 to 230°, preferably from 150 to 200°C.

12. The use of the laminate as claimed in one of claims 1 to 8 for domestic appliances, preserve cans, motor vehicle bodies, furniture and furniture parts, cardboard and paper, preferably wallpapers.

## Revendications

1. Stratifié consistant en
a) un film plastique
b) une couche d'agent d'adhésion à base de polyuréthane contenant un ou plusieurs polyesterdiols avec un poids moléculaire compris entre 500 et 2500, de préférence entre 800 et 1000,
c) le cas échéant, un autre film plastique,
d) le cas échéant, une autre couche d'agent d'adhésion à base de polyuréthane,
e) une couche de laque,
f) une couche de charge et
g) une couche de substrat, de préférence en matière plastique, en bois ou en métal.

2. Stratifié selon la revendication 1,
**caractérisé en ce que** les polyesterdiols sont des polybutanedioladipates, un polyéthylèneglycol ou leurs mélanges.

3. Stratifié selon l'une des revendications 1 ou 2,
**caractérisé en ce que** les couches d'agent d'adhésion contiennent des pigments.

4. Stratifié selon l'une des revendications 1 à 3,
**caractérisé en ce que** les films plastiques a) et c) sont en polyuréthane ou en polyester.

5. Stratifié selon l'une des revendications 1 à 4,
**caractérisé en ce que** les films plastiques sont pigmentés.

6. Stratifié selon l'une des revendications 4 ou 5,
**caractérisé en ce que** le film plastique a) et c) est un polyuréthane thermoplastique stabilisé contre les UV à base de diisocyanates, de diols à chaînes courtes servant à rallonger les chaînes et de polyéthers à chaînes longues et/ou de polyesterdiols avec une préférence particulière pour le polytétrahydrofurane et les polybutanedioladipates linéaires.

7. Stratifié selon l'une des revendications 4 ou 5,
**caractérisé en ce que** le polyester est un téréphtalate de polyalkylène, de préférence le téréphtalate de polyéthylène et/ou le téréphtalate de polybutylène.

8. Stratifié selon l'une des revendications 1 à 7,
**caractérisé en ce que** la couche de laque e) se compose d'une couche de vernis clair et d'une couche de laque sous-jacente contenant des pigments.

9. Procédé pour la fabrication du stratifié selon l'une des revendications 1 à 8,
**caractérisé en ce qu'**on applique
a) une couche de charge sur une couche de susbtrat de préférence en polyester, polyuréthane, bois ou métal,
b) au moins une couche de laque,
c) une couche d'agent d'adhésion à base de polyuréthane contenant un ou plusieurs polyesterdiols avec un poids moléculaire compris entre 500 et 2500, de préférence entre 800 et 1000,et
d) un film plastique.

10. Procédé selon la revendication 9,
**caractérisé en ce que** la couche d'agent d'adhésion est appliquée à une pression de 1 à 150 bars, de préférence de 5 à 50 bars.

11. Procédé selon la revendication 10,
**caractérisé en ce que** la compression de la couche d'agent d'adhésion est effectuée à une température comprise entre 100 et 230°C, de préférence entre 150 et 200°C.

12. Utilisation du stratifié selon l'une des revendications 1 à 8 pour les appareils ménagers, les boîtes de conserve, les carrosseries de véhicules à moteur, les meubles et les éléments de meubles, le carton et le papier, de préférence les papiers peints.
